# EUROPÄISCHE PATENTANMELDUNG

(11) **EP 1 760 450 A2**
(43) Veröffentlichungstag der Anmeldung: **07.03.2007**
(21) Anmeldenummer: 06125215.1
(22) Anmeldetag: 10.04.2002
(51) Int. Cl.: G01N 15/02, G01N 15/06, G01N 27/00

(54) **Verfahren zur Messung von Aerosolteilchen in gasförmigen Proben**

(30) Priorität: 18.04.2001 AT 6262001
(62) Teilanmeldung aus: 02450081.1
(71) Anmelder: AVL List GmbH, 8020 Graz (AT)
(72) Erfinder: Radke, Friedrich, 8051, Graz (AT); Krempl, Peter W., 8047, Kainbach/Graz (AT); Reiter, Christian, 8020, Graz (AT)
(74) Vertreter: Laminger, Norbert

(57) **Zusammenfassung**

Ein Verfahren zur Bestimmung von Aerosolteilchen in gasförmigen Proben, insbesondere in Abgasen von Dieselmotoren, umfasst die wenigstens mittelbare Abscheidung der Aerosolteilchen auf einem piezoelektrischen Schwingkristall und die Bestimmung der Schwingungsparameter der piezoelektrisch angeregten Schwingung des Kristallelementes.

Um zuverlässig und unabhängig von der Art der Aerosolteilchen die notwendige Reproduzierbarkeit und damit eine hohe Qualität der Messungen zu gewährleisten, wird zumindest ein Teil der Probe in eine zweite, kontinuierlich messende Anordnung (5, 8; 10, 11; 12, 13) geleitet, wobei zumindest einer von deren Meßwerten mittels zumindest eines Meßwertes, der über die Schwingungsparameter der piezoelektrisch angeregten Schwingungen des Kristallelementes (1) ermittelt wurde, gravimetrisch kalibriert wird.

## Beschreibung

Die Erfindung betrifft ein Verfahren zur Bestimmung von Aerosolteilchen in gasförmigen Proben, insbesondere in Abgasen von Dieselmotoren, umfassend die wenigstens mittelbare Abscheidung der Aerosolteilchen auf einem piezoelektrischen Schwingkristall und die Bestimmung der Schwingungsparameter der piezoelektrisch angeregten Schwingung des Kristallelementes.

Emissionen von Dieselmotoren werden vor allem nach den Konzentrationen der Partikelmasse und der Partikelzahl beurteilt, wobei die Messung der Partikelmassenkonzentration immer höhere Anforderungen an die Meßtechnik stellt. Eine Messung niedrigster Emissionen und/oder eine Messung mit hoher zeitlicher Auflösung kann mit den zurzeit verwendeten Verfahren nicht durchgeführt werden.

Üblicherweise erfolgt die Bestimmung der Partikelmassenkonzentration durch Ablagerung der Partikel in Filtern oder durch Abscheidung auf Substraten. Die Abscheidung auf Substraten erfolgt bei den meisten Meßverfahren durch Impaktion oder durch elektrostatische Abscheidung. Die abgelagerte bzw. abgeschiedene Partikelmasse ergibt sich aus der Differenz der Masse der Filter bzw. der Substrate nach und vor der Messung woraus anschließend die Konzentration berechnet werden kann.

Diese Meßverfahren liefern als Ergebnis die akkumulierte Partikelmasse innerhalb eines Meßzyklus. Der Nachteil beider Methoden ist die hohe Ungenauigkeit der Massenbestimmung, vor allem bei niedriger Partikelmasse, und die nicht vorhandene zeitliche Auflösung innerhalb eines Meßzyklus.

Ein Verfahren zur Massenbestimmung, das die genannten Nachteile nicht besitzt, ist die Kristall-Mikrowaage, die ein Signal mit hoher zeitlicher Auflösung bietet und besonders zur Bestimmung kleiner Massen geeignet ist. Dieses Verfahren basiert auf der Massenempfindlichkeit eines zu mechanischen Schwingungen anregbaren, mit Elektroden versehenen piezoelekrischen Kristallelementes, auf das die Partikel aufgebracht werden. Die aufgebrachte Partikelschicht bewirkt, daß die Resonanzfrequenz des Kristallelementes sinkt, wobei die Größe der Abnahme ein Maß für die aufgebrachte Partikelmasse darstellt.

Dieses Verfahren wird in der US 3,561,253 und in einer neuartigen Anordnung in der EP 0 779 510 A2 beschrieben. Gemäß der US 3,561,253 erfolgt die Abscheidung der Partikel auf das mit Elektroden versehene Quarz-Kristallelement mittels Impaktion oder durch elektrostatische Abscheidung. Die Messung der Änderung der Resonanzfrequenz des Systems Quarz-Kristallelement und Oszillator erfolgt mit einem Frequenzzähler. In der EP 0 779 510 A2 ist eine Anordnung, im wesentlichen aus einer Abscheidestufe, einem schwingenden Element mit Einrichtungen zur Bestimmung der Frequenz und einem Heizelement bestehend, beschrieben, mit der anschließend an die Massenbestimmung eine Thermogravimetrie durchgeführt werden kann. Diese Anordnungen liefern, wie in EP 0 779 510 A2 angegeben, bei Beladung mit Dieselpartikeln Änderungen der Resonanzfrequenz von nur einigen hundert Hertz.

Die Möglichkeiten eines solchen Systems zeigen sich bei der Schichtdickenbestimmung in der Dünnschichttechnik. Diese Sensoren liefern Änderungen der Resonanzfrequenz von bis zu 1 MHz, die Schichtdicke kann auf wenige nm genau bestimmt werden und das Verhalten des Sensors aufgrund der aufgebrachten Schicht kann theoretisch sehr gut beschrieben werden, vorausgesetzt, daß die sich bildenden Schichten die Eigenschaften von Festkörpern besitzen und reproduzierbar hergestellt werden können.

Dies ist jedoch bei Dieselpartikeln im Allgemeinen nicht der Fall, denn es kommt üblicherweise zu einer Flocken- und Häufchenbildung in einer nicht sehr dichten Schichtstruktur. Es zeigt sich, daß die Schwingung des Kristallelementes die angelagerte Partikelschicht nicht, wie zu erwarten wäre, verdichtet.

Die Aufgabe der vorliegenden Erfindung ist ein verbessertes Verfahren zur Messung von Aerosolteilchen, das zuverlässig und unabhängig von der Art der Aerosolteilchen die notwendige Reproduzierbarkeit und damit eine hohe Qualität der Messungen gewährleistet.

Diese Aufgabe wird dadurch gelöst, daß zumindest ein Teil der Probe in eine zweite, kontinuierlich messende Anordnung geleitet wird, wobei zumindest einer von deren Meßwerten mittels zumindest eines Meßwertes, der über die Schwingungsparameter der piezoelektrisch angeregten Schwingungen des Kristallelementes ermittelt wurde, gravimetrisch kalibriert wird. Diese Kalibrierung gewährleistet die Reproduzierbarkeit der Messungen des kontinuierlichen Verfahrens unabhängig von allfälligen, nicht im zu messenden System selbst begründeten Änderungen des Meßwertes.

Eine besonders zeitsparende Variante ist gemäß einem weiteren Erfindungsmerkmal dadurch möglich, daß die Probe geteilt und den beiden Meßverfahren parallel zugeführt wird. Diese Variante ist auch für die Kombination von die Probe nicht verändernden Meßverfahren mit solchen Verfahren geeignet, die - beispielsweise durch die Abscheidung auf einem piezoelektrischen Kristallelement oder durch Abscheidung in einem Filter - die Probe in den zu bestimmenden Eigenschaften verändern.

Wenn nur geringe Probevolumina oder -mengen zur Verfügung stehen ist vielfach eine Ausführungsform der gegenständlichen Erfindung besser geeignet, bei der die Probe den beiden Meßverfahren nacheinander zugeführt wird. Dabei ist aber von Bedeutung, dass das jeweils in der Reihe vorhergehende Verfahren die Probe nicht oder nur in Eigenschaften verändert, welche nicht durch das nachfolgende Verfahren bestimmt werden sollen.

Gemäß einer ersten erfindungsgemäßen Variante ist vorgesehen, daß das kontinuierliche Meßverfahren auf der Bestimmung des an den Aerosolteilchen gestreuten Lichtes beruht.

Eine andere Variante der Erfindung betrifft wiederum ein Verfahren, bei welchem das kontinuierliche Meßverfahren auf der Bestimmung der Lichtextinktion aufgrund der in der gasförmigen Probe enthaltenen Aerosolteilchen beruht.

Für beide der soeben angeführten Erfindungsvarianten ist es vorteilhaft, daß die Probe zuerst dem kontinuierlichen Meßverfahren und anschließend dem Verfahren mit wenigstens mittelbarer Abscheidung der Aerosolteilchen auf einem piezoelektrischen Schwingkristall zugeführt wird, da diese speziellen kontinuierlichen Meßverfahren die anschließend durch das piezoelektrische Verfahren zu bestimmenden Eigenschaften der Probe nicht verändern.

In der nachfolgenden Beschreibung soll die Erfindung anhand der beigefügten Zeichnungen bevorzugter Ausführungsbeispiele näher erläutert werden. Dabei zeigt die Fig. 1 in schematischer Darstellung eine Meßanordnung mit piezoelektrisch anregbarem Kristallelement, auf dem die Aerosolteilchen abgeschieden werden, Fig. 2 ist eine Darstellung eines kontinuierlichen optischen Meßverfahrens mit nachgeschaltetem Verfahren mit Abscheidung auf einem piezoelektrisch anregbaren Kristallelement, Fig. 3 zeigt eine Anordnung zur parallelen Durchführung eines kontinuierlichen optischen Meßverfahrens und eines Verfahrens mit Abscheidung auf einem piezoelektrisch anregbaren Kristallelement, Fig. 4 zeigt eine weitere Variante eines kontinuierlichen optischen Meßverfahrens mit nachgeschaltetem Verfahren mit Abscheidung auf einem piezoelektrisch anregbaren Kristallelement, und Fig. 5 ist eine Darstellung einer Anordnung zur parallelen Durchführung zweier Verfahren mit Abscheidung auf einem piezoelektrisch anregbaren Kristallelement, wobei vorzugsweise eines dieser Verfahren die Anregung des piezoelektrisch anregbaren Kristallelementes über weniger als die Hälfte der Abscheidungszeit der Aerosolteilchen auf dem anderen Kristallelement umfaßt.

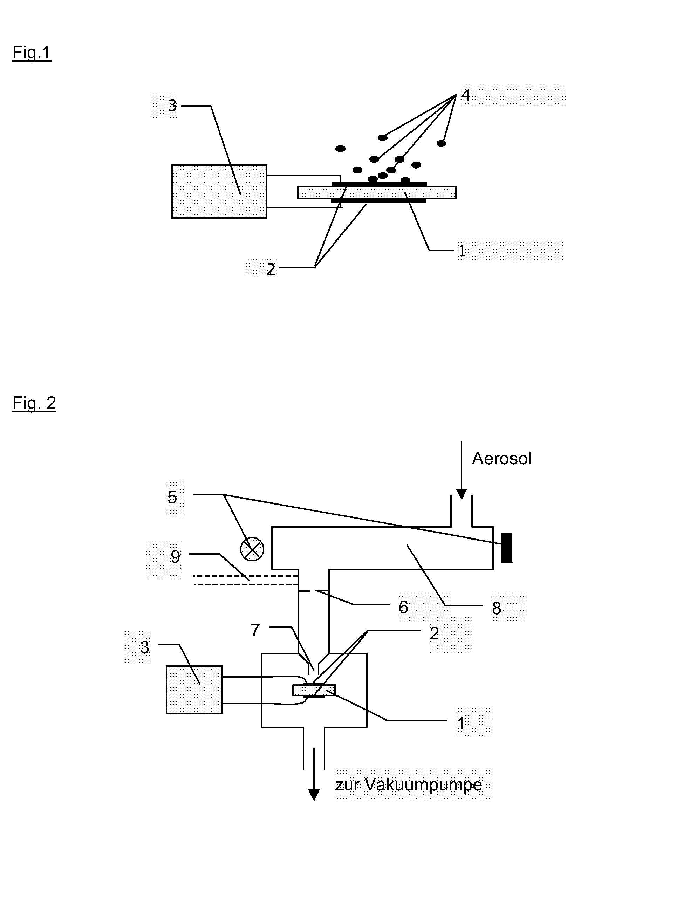

Das Sensorelement der in Fig. 1 dargestellten Meßanordnung besteht aus einem piezoelektrischen Kristallelement 1 mit Elektroden 2, einer Einrichtung 3 zur piezoelektrischen Anregung des Kristallelements zu mechanischen Schwingungen und sensitiven Flächen - im Allgemeinen sind diese identisch mit den Elektroden 2 - auf denen die Aerosolteilchen 4 wenigstens mittelbar abgeschieden werden. Die Abscheidung erfolgt üblicherweise durch Impaktion, Niederdruckimpaktion oder elektrostatische Abscheidung. Mit der Einrichtung 3 kann vorteilhafterweise auch die Dauer der piezoelektrischen Anregung, die Abtastdauer, und die zeitliche Periode der piezoelektrischen Anregung, das Abtastintervall, vorgegeben werden.

Beispielsweise könnte dabei vorgesehen sein, daß das piezoelektrische Kristallelement 1 weniger als die Hälfte der Abscheidungszeit der Aerosolteilchen zu Schwingungen angeregt wird, wobei die Abtastdauer vorteilhafterweise am Ende der Zeitspanne der Abscheidung bzw. jedes Abtastintervalles liegt. Die Dauer der Abscheidung der Aerosolteilchen auf das Kristallelement 1 kann in mehrere Abtastintervalle unterteilt sein, in welchen das Kristallelement 1 gesteuert über die Einrichtung 3 einmal angeregt wird. Vorteilhafterweise sind dabei die Abtastintervalle über die Gesamtdauer der Abscheidung der Partikel auf dem Kristallelement 1 konstant lang und ist - was nicht notwendigerweise gekoppelt sein muß - auch die Abtastdauer in jedem Abtastintervall gleich lang.

Durch Kopplung dieses Meßverfahrens mit einem kontinuierlichen Meßverfahren, kann das Signal des Kristallelements 1 zur gravimetrischen Kalibration des kontinuierlichen Verfahrens verwendet werden. Abhängig davon, ob das Aerosol durch das kontinuierliche Verfahren verändert wird oder nicht, kann die Anordnung entweder parallel - das Aerosol wird in zwei Teile geteilt und den beiden Meßanordnungen zugeführt - oder seriell - das Aerosol wird durch die kontinuierliche Meßanordnung geleitet und danach zur Gänze oder nur teilweise am Kristallelement abgeschieden - erfolgen. Ein Vorteil der seriellen Anordnung liegt darin, daß bei der gravimetrischen Messung dieselbe Probe verwendet wird.

Wie in Fig. 2 dargestellt kann als kontinuierliches Meßverfahren beispielsweise ein Opazimeter 5, 8 seriell zum Kristallelement 1 angeordnet sein. Die Meßgröße des kontnuierlichen Verfahrens ist die Intensitätsabnahme eines Lichtstrahles durch die in der Meßkammer 8 befindlichen Aerosolteilchen, bestimmt mittels Lichtquelle und Detektor 5. Die Partikelabscheidung auf das Sensorelement 2 des Kristallelementes 1 erfolgt danach durch Niederdruckimpaktion. Wenn nicht der gesamte Aerosolstrom auf das Sensorelement geleitet werden soll, was insbesonders bei hohen Partikelmassenkonzentrationen notwendig ist, da die Messung nur bei niedrigen Massenbeladungen möglich ist und ansonsten die Meßdauer sehr kurz wäre, kann über die Entnahmeleitung 9 ein Teil des Aerosols vor der Abscheidung auf dem Kristallelement 1 abgeleitet werden. Der Niederdruckimpaktor besteht aus einer kritischen Düse 6, zur Erzeugung des niederen Druckes und gleichzeitig zur Stabilisierung des Durchflusses, und einer Impaktionsdüse 7 zur definierten Abscheidung der Aerosolteilchen auf dem Kristallelement 1.

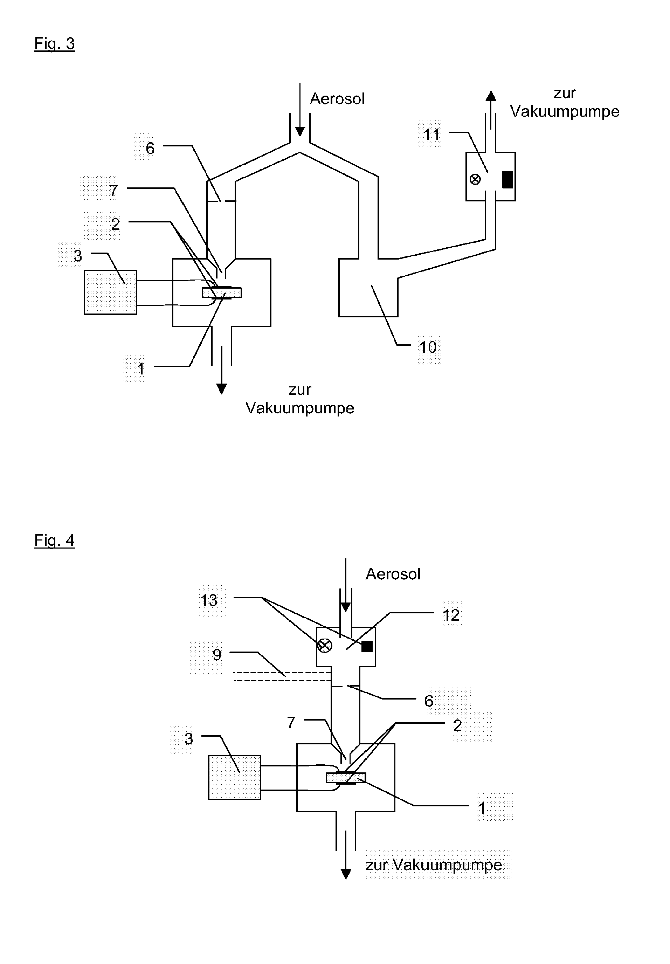

In Fig. 3 ist eine Anordnung mit einem Condensation Particle Counter (CPC) dargestellt. Die Anordnung der Meßverfahren erfolgt parallel. Im CPC wird der Partikelstrom zuerst durch eine mit Alkoholdampf gesättigte Kammer 10 geleitet, im anschließenden Rohr erfolgt die Kondensation von Alkoholdampf an den Partikeln, wodurch sich die Partikel vergrößern und in der Meßkammer 11 durch ein optisches System gezählt werden können. Die Abscheidung der Partikel am Kristallelement 1 erfolgt wie im Zusammenhang mit Fig. 2 beschrieben durch einen Niederdruckimpaktor 6, 7. Anstelle des CPC kann in dieser Anordnung auch ein Electrical Aerosol Analyzer (EAA) eingesetzt werden. Die Klassifizierung nach der Größe erfolgt im EAA durch die unterschiedliche elektrische Mobilität der vor Eintritt in die Meßkammer durch eine Corona-Entladung elektrisch aufgeladenen Partikel. Die Anzahl der Partikel je Größenintervall wird aus der an die Sammelelektrode abgegebenen elektrischen Ladung errechnet.

Ein kontinuierliches Meßverfahren kann auch auf der Streuung des Lichts an den Partikeln beruhen, wofür ein Beispiel in Fig. 4 dargestellt ist. Da dieses Streulichtverfahren die Aerosolteilchen nicht verändert kann die Anordnung mit einem Verfahren mit Abscheidung auf einem piezoelektrisch anregbaren Kristallelement 1 seriell erfolgen. Das Aerosol wird in die Meßkammer 12 mit einem System 13 zur Detektion des Streulichts geleitet. Die Partikelabscheidung am Kristallelement 1 erfolgt anschließend wiederum mit einem Niederdruckimpaktor 6, 7. Über die Entnahmeleitung 9 besteht die Möglichkeit einen Teil aus dem Gasstrom zum Kristallelement 1 zu entfernen.

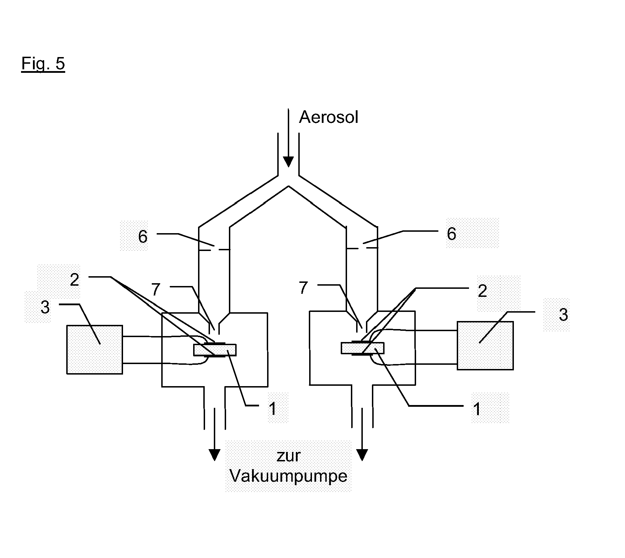

Systeme mit denen die Masse mit hoher Zeitauflösung bestimmt werden soll, können dadurch realisiert werden, daß auch als kontinuierliches Meßverfahren ein piezoelektrisches Kristallelement verwendet wird. Wie in Fig. 5 dargestellt, werden die Meßanordnungen mit jeweils einem Kristallelement 1 parallel angeordnet. Beim kontinuierlichen System erfolgt die piezoelektrische Anregung des Kristallelements 1 während der Gesamtdauer der Messung, beim System zur Kalibrierung erfolgt die Anregung nur in bestimmten Abtastintervallen mit einer bestimmten Abtastdauer, wie weiter oben in Zusammenhang mit Fig. 1 beschrieben worden ist.

Die gravimetrische Kalibration der kontinuierlichen Meßverfahren erfolgt für aufeinanderfolgende definierte Zeitintervalle. Innerhalb dieser Zeitintervalle wird die akkumulierte Partikelmasse am Kristallelement 1 bestimmt und damit rückwirkend das Signal der kontinuierlichen Meßanordnungen kalibriert.

## Patentansprüche

1. Verfahren zur Bestimmung von Aerosolteilchen in gasförmigen Proben, insbesondere in Abgasen von Dieselmotoren, umfassend die wenigstens mittelbare Abscheidung der Aerosolteilchen auf einem piezoelektrischen Schwingkristall und die Bestimmung der Schwingungsparameter der piezoelektrisch angeregten Schwingung des Kristallelementes, **dadurch gekennzeichnet, daß** zumindest ein Teil der Probe in eine zweite, kontinuierlich messende Anordnung (5, 8; 10, 11; 12, 13) geleitet wird, wobei zumindest einer von deren Meßwerten mittels zumindest eines Meßwertes, der über die Schwingungsparameter der piezoelektrisch angeregten Schwingungen des Kristallelementes (1) ermittelt wurde, gravimetrisch kalibriert wird.

2. Verfahren nach Anspruch 1, **dadurch gekennzeichnet, daß** die Probe geteilt und den beiden Meßverfahren parallel zugeführt wird.

3. Verfahren nach Anspruch 1, **dadurch gekennzeichnet, daß** die Probe den beiden Meßverfahren nacheinander zugeführt wird.

4. Verfahren nach einem der Ansprüche 1 bis 3, **dadurch gekennzeichnet, daß** das kontinuierliche Meßverfahren auf der Bestimmung des an den Aerosolteilchen gestreuten Lichtes beruht.

5. Verfahren nach einem der Ansprüche 1 bis 3, **dadurch gekennzeichnet, daß** das kontinuierliche Meßverfahren auf der Bestimmung der Lichtextinktion aufgrund der in der gasförmigen Probe enthaltenen Aerosolteilchen beruht.

6. Verfahren nach einem der Ansprüche 4 oder 5, **dadurch gekennzeichnet, daß** die Probe zuerst dem kontinuierlichen Meßverfahren und anschließend dem Verfahren mit wenigstens mittelbarer Abscheidung der Aerosolteilchen auf einem piezoelektrischen Schwingkristall (1) zugeführt wird.
